# EUROPEAN PATENT SPECIFICATION

(11) **EP 2 736 108 B1**
(45) Date of publication and mention of the grant of the patent: **19.04.2017**
(21) Application number: 12814585.1
(22) Date of filing: 19.07.2012
(51) Int. Cl.: H01M 8/0273, H01M 8/0276, H01M 8/0284, H01M 8/1018

(54) **GASKET FOR FUEL CELL**
BRENNSTOFFZELLENDICHTUNG
JOINT POUR PILE À COMBUSTIBLE

(30) Priority: 19.07.2011 JP 2011157730
(43) Date of publication of application: 28.05.2014
(73) Proprietor: NOK Corporation, Tokyo 105-8585 (JP)
(72) Inventor: HORIMOTO, Takayuki, Fujisawa-shi Kanagawa 251-0042 (JP); KOGA, Shotaro, Fujisawa-shi Kanagawa 251-0042 (JP)
(74) Representative: TBK
(86) International application number: PCT/JP2012/068285
(87) International publication number: WO 2013/012026

(56) References cited:
- EP-A1- 2 048 730
- WO-A1-01/59864
- JP-A- 2000 012 053

## Description

### BACKGROUND OF THE INVENTION

### Field of the Invention

The present invention relates to a gasket which is used in a fuel battery cell constructing a power generation element of a fuel battery, and is integrally provided in a gas diffusion layer (GDL).

### Description of the Conventional Art

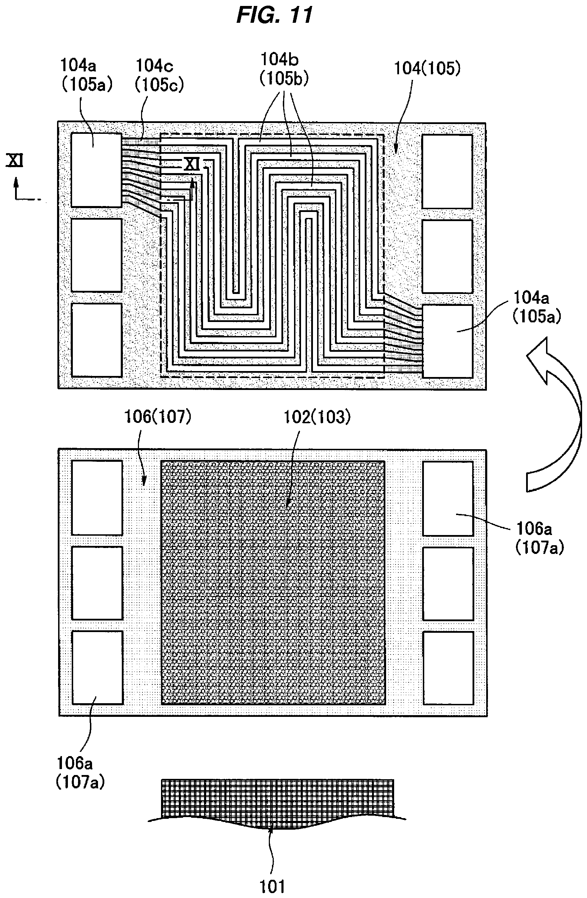

As shown in Figs. 11 to 13, in the fuel battery, a fuel battery cell 100 which is a minimum unit for power generation is constructed by pinching a membrane electrode assembly (MEA) 101 constituted by an electrolyte membrane and catalyst electrode layers (not shown) provided in both surfaces of the electrolyte membrane, by separators 104 and 105 via GDLs 102 and 103 from both sides in a thickness direction. Gaskets 106 and 107 each of which is made of a rubber-like elastic material (a rubber material or a synthetic resin material having a rubber-like elasticity) are integrally formed in outer peripheral sides of the GDLs 102 and 103 in a state in which a part of the rubber-like elastic material is impregnated into edge portions of the GDLs 102 and 103.

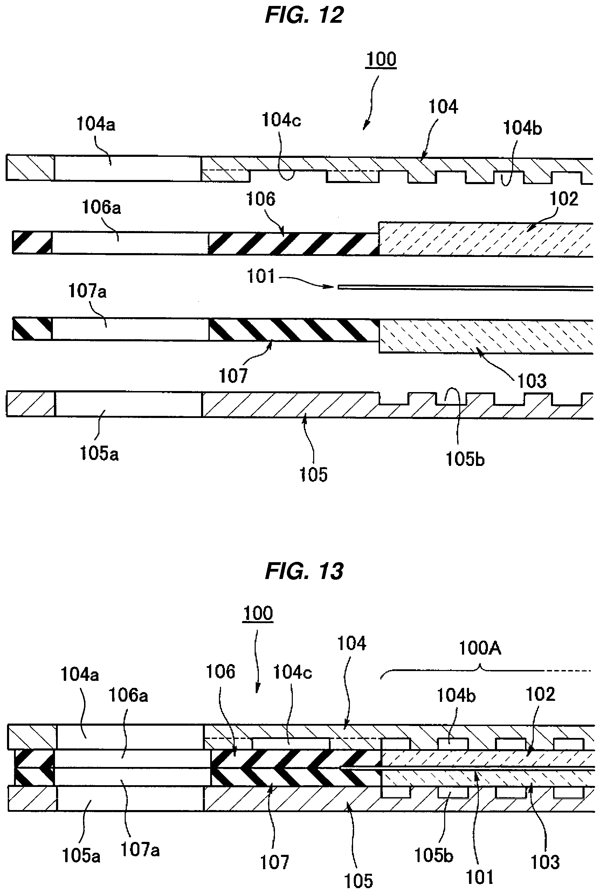

A plurality of manifold holes 104a, 105a, 106a and 107a are provided respectively in the separators 104 and 105 and the gaskets 106 and 107, and fuel gas reaction grooves 104b and oxidant gas reaction grooves 105b are formed in facing surfaces (a gas reaction area 100A by the MEA 101 shown in Fig. 13) in the separators 104 and 105 to the GDLs 102 and 103, as shown in Figs. 11 and 12. Further, a gas lead-in groove 104c and a gas lead-in groove 105c are formed in facing surfaces in the separators 104 and 105 to the gaskets 106 and 107, the gas lead-in groove 104c and the gas lead-in groove 105c communicating between the manifold holes 104a and 105a and the gas reaction area 100A (the fuel gas reaction grooves 104b and the oxidant gas reaction grooves 105b). In a laminated state shown in Fig. 13, a supply passage and a discharge passage for the fuel gas, the oxidant gas and a refrigerant are formed by superposition (communication) between the manifold holes 104a and 105a of the separators 104 and 105, and the manifold holes 106a and 107a of the gaskets 106 and 107.

In other words, this kind of fuel battery is structured such that in each of the fuel battery cells 100, the fuel gas (hydrogen) circulating the manifold holes is supplied to one catalyst electrode layer (anode) side of the MEA 101 via the gas lead-in groove 104c, the fuel gas reaction grooves 104b and the one GDL 102, the oxidant gas (air) circulating the other manifold holes is supplied to the other catalyst electrode layer (cathode) side of the MEA 101 via the gas lead-in groove 105c, the oxidant gas reaction groove 105b and the other GDL 103, and an electric power is generated on the basis of a reverse reaction of an electrolysis of water, that is, a reaction of creating water from hydrogen and oxygen. Further, an electromotive force generated by each of the fuel battery cells 100 is low, however, a necessary electromotive force can be obtained by forming a stack in which a lot of fuel battery cells 100 are laminated and are electrically connected in series (refer, for example, to patent documents 1 and 2).

### PRIOR ART DOCUMENT

### Patent Document

Patent Document 1: JP 2004-335453 A
Patent Document 2: JP 2007-026847 A
Patent Document 3: EP 2 048 730 A1
Patent Document 4: JP 2000-012053 A

EP 2 048 730 A1 discloses a gasket according to the preamble of claim 1. The gasket uses a gas flow passage. This gas flow passage leads from a manifold to a region of a gas diffusion layer and an electrode layer.

JP 2000-012053 A discloses a solid high-polymer electrolyte-type fuel cell. Gas passage plates are in press contact with electrode surfaces. One surface of the gas passage plates facing the electrodes, has circulation grooves for supplying fuel gas, while another surface of the gas passage plates forms a flat surface. Metallic plates are disposed on the flat surface side of the gas passage plates.

### SUMMARY OF THE INVENTION

### Problem to be Solved by the Invention

This kind of fuel battery of Patent Document 1 or 2 is required to be further downsized and cost reduced in the stack. The structure in which the gaskets 106 and 107 are integrally formed in the GDLs 102 and 103 as mentioned above is improved its workability in a stack assembling, and is effective for reducing cost. However, the gas lead-in groove 104c and the gas lead-in groove 105c between the manifold holes and the gas reaction area 100A (the fuel gas reaction grooves 104b and the oxidant gas reaction grooves 105b) are formed by processing the separators 104 and 105, and are higher in their processing cost.

It is the object of the present invention to improve a gasket for a fuel battery to achieve a further cost reduction of a fuel battery stack.

### Means for Solving the Problem

The object is solved by a gasket having the features of claim 1.

### Effect of the Invention

On the basis of the gasket for the fuel battery according to the present invention, a flow passage which circulates reaction gas (fuel gas and oxidant gas) between the manifold hole and the gas reaction area is formed by the gas lead-in groove formed in the gasket, the gas lead-in groove can be formed at the same time of molding the gasket by a rubber-like elastic material, and it is not necessary to process the gas lead-in groove in the separator side. Accordingly, it is possible to reduce cost.

Further, it is possible to prevent a mechanical strength of the gasket from being lowered by the gas lead-in groove, on the basis of the reinforcing plate which is integrally provided in the gasket, and it is possible to easily assemble the fuel battery stack.

Further, on the basis of the structure in which the gas lead-in groove is formed in the reinforcing plate which is integrally buried in the gasket, the gas lead-in groove is prevented from being deformed by compression of the gasket. Further, since the mechanical strength of the gas lead-in groove forming portion is compensated, it is possible to easily assemble the fuel battery stack.

### BRIEF EXPLANATION OF THE DRAWINGS

Fig. 1 is a plan view of a separated state of a first unclaimed example of a gasket for a fuel battery, in which the gasket is
   seen from a laminating direction together with an MEA and a separator;
Fig. 2 is a partly cross sectional view of a separated state of the first unclaimed example of the gasket for the fuel battery,
   in which the gasket is shown by being cut at a position of a line I-I in Fig. 1 together with the MEA and the separator;
Fig. 3 is a partly cross sectional view of a laminated state of the first unclaimed example of the gasket for the fuel battery,
   in which the gasket is shown by being cut at the position of the line I-I in Fig. 1 together with the MEA and the separator;
Fig. 4 is an explanatory view schematically showing a power generation mechanism in a fuel battery cell;
Fig. 5 is a plan view of a separated state of a second unclaimed example of the gasket for the fuel battery, in which the gasket is seen from a laminating direction together with an MEA and a separator;
Fig. 6 is a partly cross sectional view of a separated state of the second unclaimed example of the gasket for the fuel battery,
   in which the gasket is shown by being cut at a position of a line V-V in Fig. 5 together with the MEA and the separator;
Fig. 7 is a partly cross sectional view of a separated state of the other example of the second unclaimed example of the gasket for the fuel battery,
   in which the gasket is shown by being cut at the position of the line V-V in Fig. 5 together with the MEA and the separator;
Fig. 8 is a plan view of a separated state of an embodiment of the gasket for the fuel battery according to the present invention, in which the gasket is seen from a laminating direction together with an MEA and a separator;
Fig. 9 is a partly cross sectional view of a separated state of the embodiment of the gasket for the fuel battery according to the present invention, in which the gasket is shown by being cut at a position of a line VIII-VIII in Fig. 8 together with the MEA and the separator;
Fig. 10 is a partly cross sectional view of a laminated state of the embodiment of the gasket for the fuel battery according to the present invention, in which the gasket is shown by being cut at the position of the line VIII-VIII in Fig. 8 together with the MEA and the separator;
Fig. 11 is a plan view of a separated state of an example of a gasket for a fuel battery according to the prior art, in which the gasket is seen from a laminating direction together with an MEA and a separator;
Fig. 12 is a partly cross sectional view of a separated state of the example of the gasket for the fuel battery according to the prior art, in which the gasket is shown by being cut at a position of a line XI-XI in Fig. 11 together with the MEA and the separator; and
Fig. 13 is a partly cross sectional view of a laminated state of the example of the gasket for the fuel battery according to the prior art, in which the gasket is shown by being cut at the position of the line XI-XI in Fig. 11 together with the MEA and the separator.

### Description of Reference Numerals

- 1, 2: gasket
- 11, 21: gasket main body
- 12, 13, 22, 23: reinforcing plate
- 1 a, 2a, 6a, 7a: manifold hole
- 1 b, 2b: gas lead-in groove
- 3, 4: GDL
- 5: MEA
- 6, 7: separator
- 6b: fuel gas reaction groove
- 7b: oxidant gas reaction groove
- 10A: gas reaction area

### DETAILED DESCRIPTION OF PREFERRED EMBODIMENTS

A description will be in detail given below of unclaimed examples and an embodiment of a
gasket for a fuel battery according to the present invention with reference to the accompanying drawings.

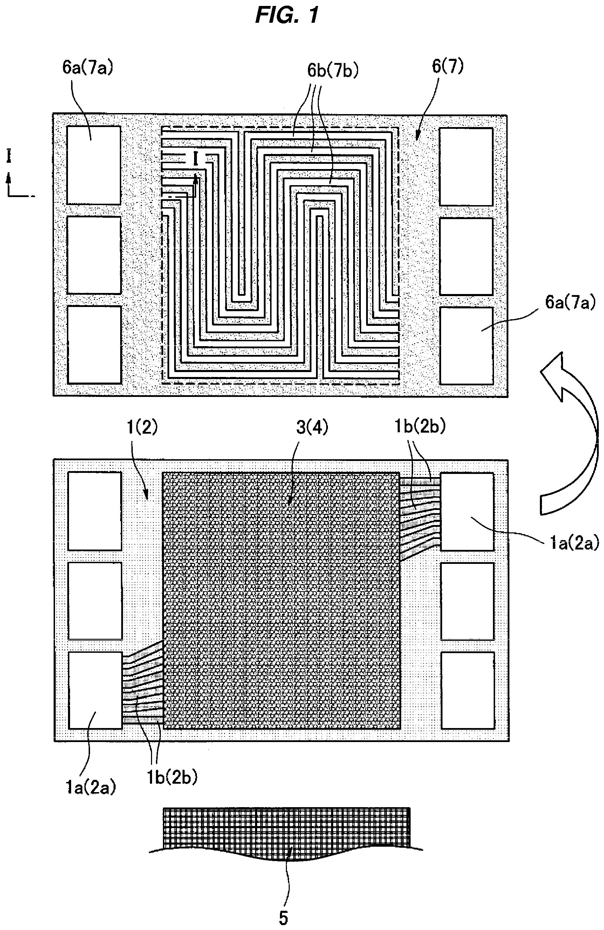

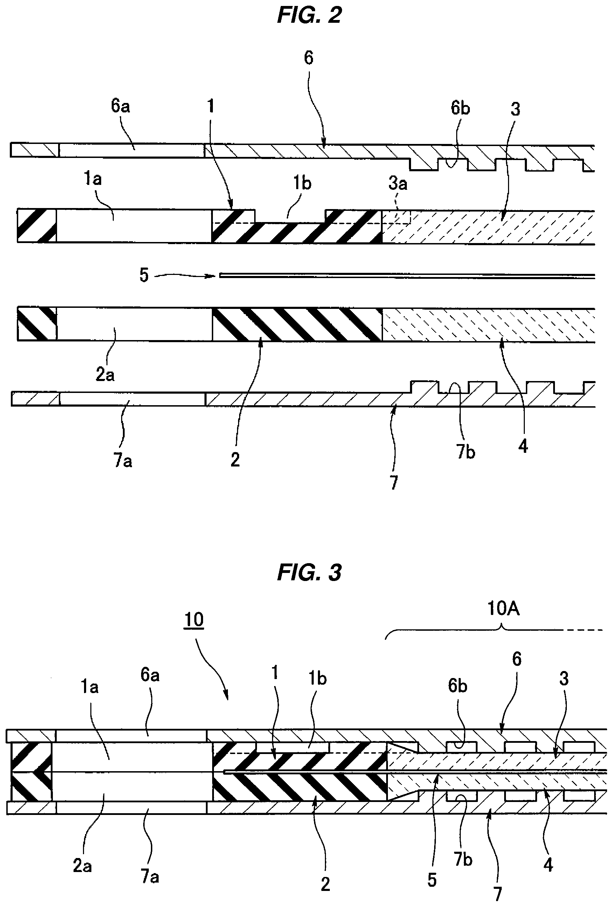

First of all, Fig. 1 is a plan view of a separated state of a first unclaimed example of the gasket for the fuel battery, in which the
gasket is seen from a laminating direction together with an MEA and a separator, Fig. 2 is a partly cross sectional view of a separated state, in which the gasket is shown by being cut at a position of a line I-I in Fig. 1, and Fig. 3 is a partly cross sectional view of a laminated state, in which the gasket is shown by being cut at the position of the line I-I in Fig. 1.

Reference numerals 1 and 2 in these drawings denote the gasket. The gasket is formed in a plate shape or a sheet shape by a rubber-like elastic material (a rubber material or a synthetic resin material having a rubber-like elasticity), preferably a material which is selected from an ethylene propylene rubber (EPDM), a silicone rubber (VMQ), a fluorine-contained rubber (FKM), and a perfluoro rubber (FFKM).

Gas diffusion layers (GDL) 3 and 4 are made of a porous conductive material having infinite number of micro through air gaps allowing gas circulation such as a metal porous body or a carbon fiber and are formed as a plate shape or a sheet shape with the same shape and the same size. The gaskets 1 and 2 are integrally formed in the GDLs 3 and 4 so that a part of the rubber-like elastic material of the gaskets 1 and 2 surrounds outer peripheries of the GDLs 3 and 4 by penetrating into end edge portions of the GDLs 3 and 4 so as to harden.

Further, reference numeral 5 denotes a membrane electrode assembly (MEA). The MEA 5 is constructed by an electrolyte membrane and catalyst electrode layers (not shown) which are provided in both surface of the electrolyte membrane. Reference numerals 6 and 7 denote a separator made of a carbon or a conductive metal.

Further, in the laminated state shown in Fig. 3, a fuel battery cell 10 corresponding to a minimum unit for power generation is constructed by pinching the MEA 5 by the separators 6 and 7 via the GDLs 3 and 4 from both sides in a thickness direction of the MEA 5. At this time, an outer peripheral portion of the MEA 5 is pinched in a close contact manner by the gaskets 1 and 2 in both sides of the MEA 5, and opposite surfaces to the MEA 5 in the gaskets 1 and 2 are brought into close contact with the separators 6 and 7.

Plural pairs of manifold holes 1 a and 2a are provided respectively in the gaskets 1 and 2, and manifold holes 6a and 7a are provided at positions corresponding to the manifold holes 1 a and 2a of the gaskets 1 and 2 in the separators 6 and 7. Therefore, in the laminated state shown in Fig. 3, supply passages and discharge passages (manifold holes) for a fuel gas, an oxidant gas and a refrigerant are formed by superposition (communication) of the manifold holes 1 a and 2a, and 6a and 7a with each other.

A plurality of fuel gas reaction grooves 6b are formed in a facing surface to the GDL 3 in the one separator 6, and a plurality of oxidant gas reaction grooves 7b are formed in a facing surface to the GDL 4 in the other separator 7. In the laminated state shown in Fig. 3, an area in which the MEA 5, the GDLs 3 and 4, and the fuel gas reaction grooves 6b and the oxidant gas reaction grooves 7b are superposed forms a gas reaction area 10A, that is, a power generation area, and a periphery of the gas reaction area 10A is sealed by the gaskets 1 and 2.

A gas lead-in groove 1 b extending so as to communicate the manifold hole 1 a and the fuel gas reaction grooves 6b in the gas reaction area 10A with each other is formed in a facing surface to the separator 6 in the gasket 1, and a gas lead-in groove 2b extending so as to communicate the manifold hole 2a and the oxidant gas reaction grooves 7b in the gas reaction area 10A with each other is formed in a facing surface to the separator 7 in the gasket 2 in the same manner (the gas lead-in groove 2b is not shown in Figs. 2 and 3). Here, the gas lead-in groove 1 b of the gasket 1 is extended so as to reach an end portion of the GDL 3, as shown by reference symbol 3a in Fig. 2, and the gas lead-in groove 2b of the gasket 2 is also extended so as to reach an end portion of the GDL 4 in the same manner.

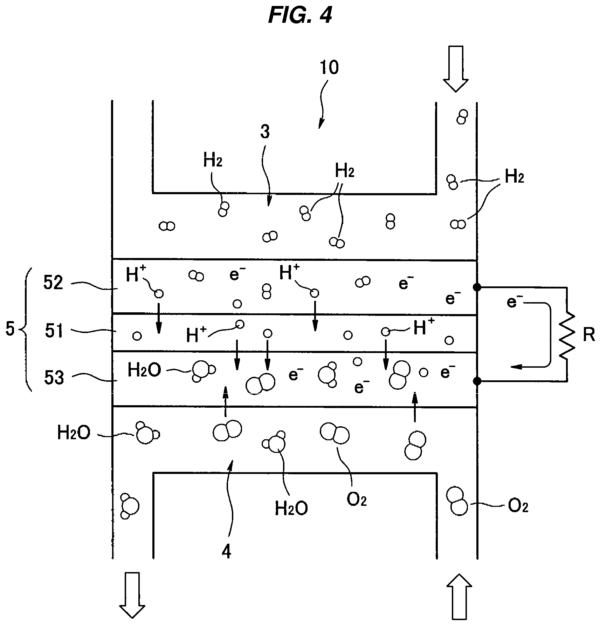

The fuel battery cell 10 constructed as mentioned above is structured, as shown in Fig. 4, such that the fuel gas including hydrogen H² is supplied to one catalyst layer (an anode) 52 in the MEA 5 via the fuel gas flow passage (the gas lead-in groove 1 b and the fuel gas reaction grooves 6b) and the one GDL 3, the oxidant gas (air) including oxygen O² is supplied to the other catalyst electrode layer (a cathode) 53 in the MEA 5 via the oxidant gas flow passage (the gas lead-in groove 2b and the oxidant gas reaction grooves 7b) and the other GDL 4, and an electric power is generated by an electrochemical reaction creating water H₂O from hydrogen H² and oxygen O₂.

In other words, the hydrogen H² in the fuel gas supplied to the anode 52 in the MEA 5 is decomposed into electron e- and hydrogen ion H⁺ on the basis of a catalyst action of the anode 52, and the electron e- flows as an electric current toward the cathode 53 in the MEA 5 through an external load R. Further, since the hydrogen ion H⁺ created by separation of the electron e- from the hydrogen H² is attracted to the electron e⁻ of the cathode 53, the hydrogen ion H⁺ moves to the cathode 53 via the electrolyte membrane 51 in the MEA 5.

On the other hand, the oxygen O₂ in the oxidant gas supplied to the cathode 53 in the MEA 5 receives the electron e- on the basis of the catalyst action of the cathode 53, and changes to the oxygen ion O⁻. Further, the oxygen ion O⁻ is combined with the hydrogen ion H⁺ coming from the anode 52 via the electrolyte membrane 51, whereby the water H₂O is created.

At this time, the fuel gas and the oxidant gas are circulated between the flow passage which is formed by the superposition (the communication) of the manifold holes 1 a and 2a, and 6a and 7a with each other, and the fuel gas reaction grooves 6b and the oxidant gas reaction grooves 7b in the gas reaction area 10A, via the gas lead-in groove 1 b or 2b, as shown in Fig. 3. Further, since the gas lead-in grooves 1 b and 2b are extended so as to reach the end portions of the GDLs 3 and 4, the circulation is smoothly carried out between the fuel gas reaction grooves 6b and the oxidant gas reaction grooves 7b.

Further, according to the structure mentioned above, since the gas lead-in grooves 1 b and 2b are formed in the gaskets 1 and 2, it is not necessary to process the gas lead-in grooves in the side of the separators 6 and 7 made of the metal or the carbon. Further, since the gas lead-in grooves 1b and 2b are formed within a molding metal mold at the same time of integrally forming the gaskets 1 and 2 into the GDLs 3 and 4 by the rubber-like elastic material, it is possible to reduce a cost.

Further, it is not necessary to change the design of the separators 6 and 7 at the time of changing the design of the gas lead-in grooves 1b and 2b, and the design change can be achieved by the design change of the gaskets 1 and 2. Therefore, it is possible to contribute to a cost reduction at the time of changing the design as mentioned above.

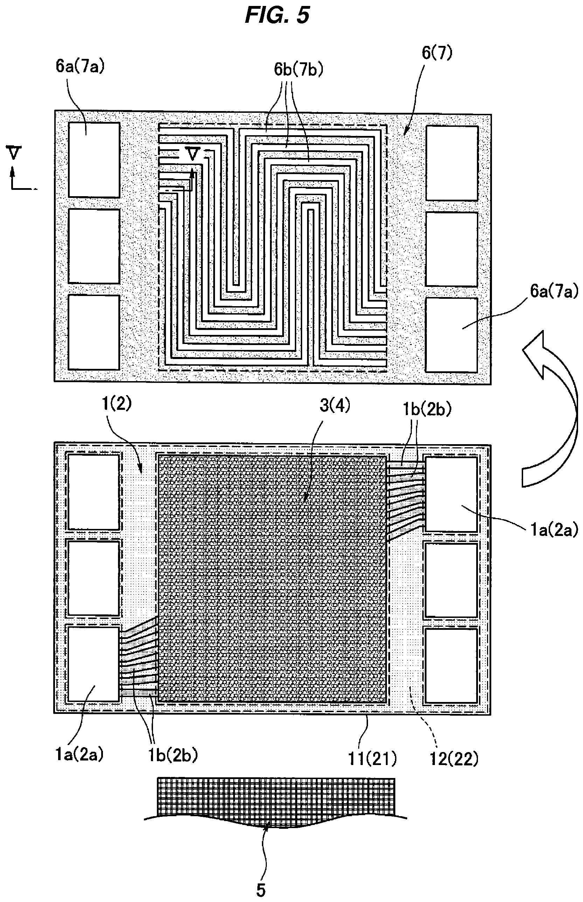

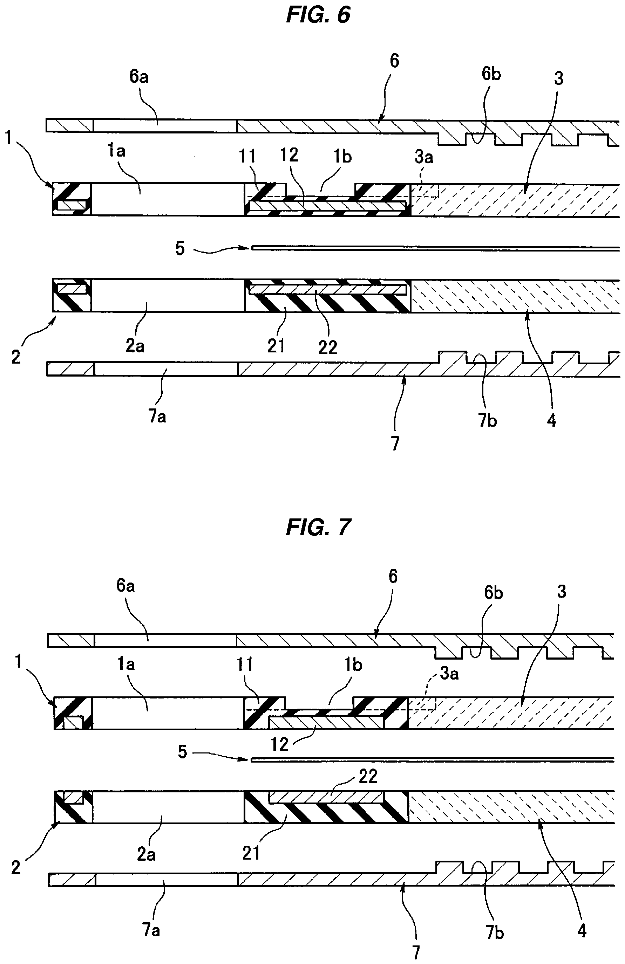

Next, Fig. 5 is a plan view of a separated state of a second unclaimed example of the gasket for the fuel battery, in which the
gasket is seen from a laminating direction together with an MEA and a separator, Fig. 6 is a partly cross sectional view of a separated state, in which the gasket is shown by being cut at a position of a line V-V in Fig. 5, and Fig. 7 is a partly cross sectional view of a separated state of the other example of the second unclaimed example, in which the gasket is shown by being cut at the position of the line V-V in Fig. 5 together with the MEA and the separator.

The second example is different from the first example mentioned above in a matter that the gaskets 1 and 2 are constructed by gasket main bodies 11 and 21 which are made of a rubber-like elastic material, and reinforcing plates 12 and 22 which are integrally provided in the gasket main bodies 11 and 21, and are made of a material having a higher rigidity than the rubber-like elastic material, for example, a synthetic resin or a metal. Plane projection shapes of the reinforcing plates 12 and 22 are approximately similar to plane projection shapes of the gasket main bodies 11 and 21. The structures of the other portions are basically the same as those of the first example.

Among them, the example shown in Fig. 6 is structured such that in the case that the material of the reinforcing plates 12 and 22 is short in its chemical stability against the fuel gas and the oxidant gas, the reinforcing plates 12 and 22 are prevented from coming into contact with the fuel gas and the oxidant gas by integrally forming the reinforcing plates 12 and 22 in the gasket main bodies 11 and 21 in a buried state. Further, the example shown in Fig. 7 is structured in the case that the material of the reinforcing plates 12 and 22 has no problem in its chemical stability against the fuel gas and the oxidant gas, the reinforcing plates 12 and 22 is integrally formed in a half-buried state, that is, in a buried state in which the reinforcing plates 12 and 22 are partly exposed from the gasket main bodies 11 and 21. An outer peripheral portion of the MEA 5 is structured such as to be sealed by close contact of the gasket main bodies 11 and 21.

According to the second example, a mechanical strength of the gaskets 1 and 2 is compensated by the reinforcing plates 12 and 22 which are integrally provided in a whole area of the gasket main bodies 11 and 21, that is, the strength of the gaskets 1 and 2 is prevented from being lowered by forming the gas lead-in grooves 1b and 2b. Therefore, it is possible to make an assembly of the cell (the stack) easy.

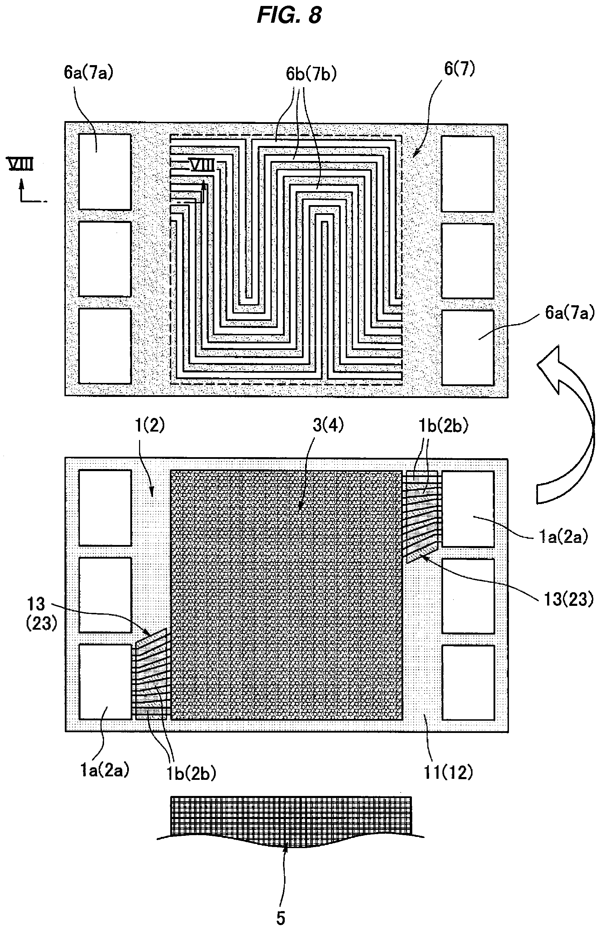

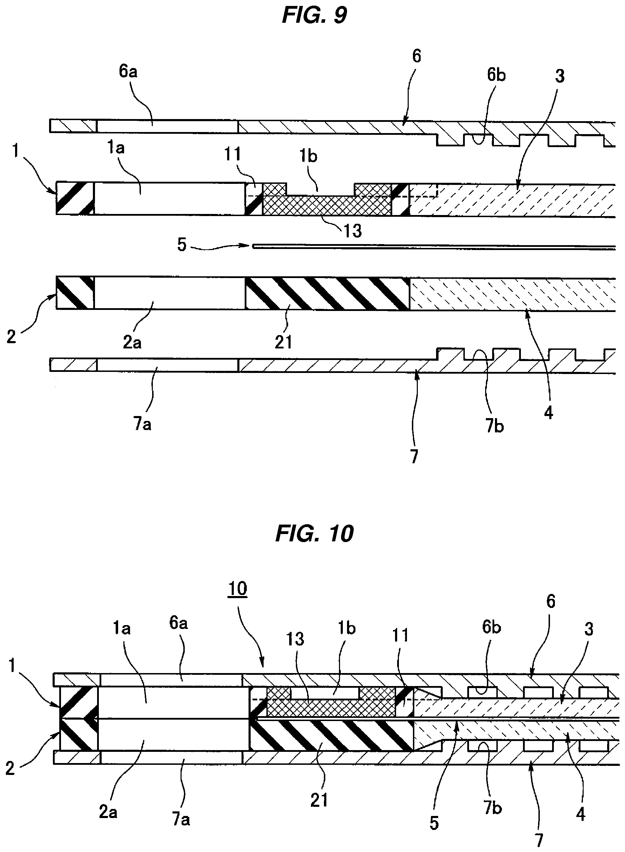

Next, Fig. 8 is a plan view of a separated state of an embodiment of the gasket for the fuel battery according to the present invention, in which the gasket is seen from a laminating direction together with an MEA and a separator, Fig. 9 is a partly cross sectional view of a separated state in which the gasket is shown by being cut at a position of a line VIII-VIII in Fig. 8, and Fig. 10 is a partly cross sectional view of a laminated state in which the gasket is shown by being cut at the position of the line VIII-VIII in Fig. 8.

The embodiment is structured such that the gaskets 1 and 2 are constructed by the gasket main bodies 11 and 21 which are made of the rubber-like elastic material, and reinforcing plates 13 and 23 which are integrally provided while being positioned between the manifold holes 1a and 2a in the gasket main bodies 11 and 21 and the GDLs 3 and 4, that is, in a forming area of the gas lead-in grooves 1b and 2b, the reinforcing plates 13 and 23 are made of a material having a higher rigidity than the rubber-like elastic material, for example, a synthetic resin or a metal which has no problem in a chemical stability against the fuel gas and the oxidant gas, and the gas lead-in grooves 1 b and 2b of the gaskets 1 and 2 are formed in the reinforcing plates 13 and 23. Here, an outer peripheral portion of the MEA 5 is structured such as to be sealed by close contact of the gasket main bodies 11 and 21. The other structures are basically the same as those of the first example.

According to the embodiment, since the mechanical strength of the forming portion of the gas lead-in grooves 1b and 2b in the gaskets 1 and 2 is compensated, it is possible to make the assembly of the cell (the stack) easy, and it is possible to prevent the flow passage cross section of the gas lead-in grooves 1b and 2b from being reduced by the compression of the gasket main bodies 11 and 21 in the laminated state shown in Fig. 10.

Further, since the gaskets 1 and 2 are obtained by previously forming the gas lead-in grooves 1b and 2b in the reinforcing plates 13 and 23, and integrally forming the gasket main bodies 11 and 21 in the reinforcing plates 13 and 23, the design change of the gas lead-in grooves 1b and 2b can be achieved by the design change of only the reinforcing plates 13 and 23. Therefore, it is possible to contribute to the cost reduction at the time of changing the design as mentioned above.

## Claims

1. A gasket (1, 2) for a fuel battery, the gasket (1, 2) being integrally formed by a rubber-like elastic material in an outer periphery of a gas diffusion layer (3, 4) which is interposed between a separator (6, 7) and a membrane electrode assembly (5), and being brought into close contact with said separator (6, 7), wherein a gas lead-in groove (1b, 2b) is formed in a facing surface of the gasket (1, 2) to said separator (6, 7), the gas lead-in groove (1b, 2b) communicating a manifold hole (1a, 2a, 6a, 7a) provided in the gasket (1, 2) and a gas reaction area (10A) by said membrane electrode assembly (5) with each other, and the gas lead-in groove (1b, 2b) extends to an end portion of said gas diffusion layer (3, 4),
wherein a reinforcing plate (13, 23) is integrally provided in a gasket main body (11, 21) of the gasket (1, 2),
**characterized in that**
the gas lead-in groove (1b, 2b) is formed in the reinforcing plate (13, 23).

## Patentansprüche

1. Dichtung (1, 2) für eine Brennstoffbatterie, wobei die Dichtung (1, 2) einstückig aus einem gummiartigen elastischen Material an einem Außenumfang einer Gasdiffusionslage (3, 4) ausgebildet ist, die zwischen einem Separator (6, 7) und einer Membranelektrodenbaugruppe (5) angeordnet ist, und die in einen engen Kontakt mit dem Separator (6, 7) gebracht ist, wobei eine Gaseinleitnut (1b, 2b) in einer zu dem Separator (6, 7) gewandten Fläche der Dichtung (1, 2) ausgebildet ist, wobei die Gaseinleitnut (1b, 2b) ein Sammelleitungsloch (1a, 2a, 6a, 7a), das in der Dichtung (1, 2) vorgesehen ist, und einen Gasreaktionsbereich (10A) durch die Membranelektrodenbaugruppe (5) miteinander in Kommunikation bringt, und die Gaseinleitnut (1b, 2b) sich zu einem Endabschnitt der Gasdiffusionslage (3, 4) erstreckt,
wobei eine Verstärkungsplatte (13, 23) in einem Dichtungshauptkörper (11, 21) der Dichtung (1, 2) einstückig vorgesehen ist,
**dadurch gekennzeichnet, dass**
die Gaseinleitnut (1b, 2b) in der Verstärkungsplatte (13, 23) ausgebildet ist.

## Revendications

1. Joint (1, 2) pour pile à combustible, le joint (1, 2) étant intégralement formé par un matériau élastique de type caoutchouc dans une périphérie extérieure d'une couche de diffusion de gaz (3, 4) qui est interposée entre un séparateur (6, 7) et un ensemble membrane-électrode (5), et étant mis en contact rapproché avec ledit séparateur (6, 7), dans lequel une rainure d'entrée de gaz (1b, 2b) est formée dans une face du joint (1, 2) faisant face audit séparateur (6, 7), la rainure d'entrée de gaz (1b, 2b) communiquant un trou de collecteur (1a, 2a, 6a, 7a) prévu dans le joint (1, 2) et une zone de réaction du gaz (10A) par ledit ensemble membrane-électrode (5) entre eux, et la rainure d'entrée de gaz (1b, 2b) s'étend vers une partie d'extrémité de ladite couche de diffusion de gaz (3, 4),
dans lequel une plaque renforcée (13, 23) est prévue intégralement dans un corps principal de joint (11, 21) du joint (1, 2),
**caractérisé en ce que**
la rainure d'entrée de gaz (1b, 2b) est formée dans la plaque renforcée (13, 23).
